# EUROPÄISCHE PATENTSCHRIFT

(11) **EP 1 857 692 B1**
(45) Veröffentlichungstag und Bekanntmachung des Hinweises auf die Patenterteilung: **24.06.2015**
(21) Anmeldenummer: 07107622.8
(22) Anmeldetag: 07.05.2007
(51) Int. Cl.: F16B 25/00

(54) **Spanlos gewindeformende Schraube**
Swarf free self tapping screw
Vis autotaraudeuse sans copeaux

(30) Priorität: 16.05.2006 DE 102006000232
(43) Veröffentlichungstag der Anmeldung: 21.11.2007
(73) Patentinhaber: HILTI Aktiengesellschaft, 9494 Schaan (LI)
(72) Erfinder: Matthiesen, Sven, 88131, Lindau (DE); Rieger, Frank, 87668, Zellerberg (DE); Hertlein, Peter, 9473, Gams (CH); Baumgartner, Michael, 9451, Kriessern (CH); Mugg, Peter, 6714, Nüziders (AT); Schäfer, Matthias, 96450, Coburg (DE)
(74) Vertreter: Hilti Aktiengesellschaft Corporate Intellectual Property

(56) Entgegenhaltungen:
- EP-A2- 0 845 607
- DE-A1- 19 633 730
- DE-U1- 29 705 916
- US-A- 507 919
- US-A- 4 844 676

## Beschreibung

Die vorliegende Erfindung betrifft eine spanlos gewindeformende Schraube der im Oberbegriff von Patentanspruch 1 genannten Art. Derartige Schrauben werden insbesondere zur Verschraubung an Metallblechen genutzt.

Aus der US 4 844 676 ist eine selbst-penetrierende Schraube mit einem Kopf und einem sich daran anschliessenden Schaft bekannt, der an seiner dem Kopf abgewandten Seite in einer Spitze endet. Der Schaft weist dabei einen balligen ersten Abschnitt, der sich zur Spitze hin verjüngt, und einen sich in Richtung des Kopfes daran anschliessenden zweiten zylindrischen Abschnitt auf. Der gebogene erste Abschnitt weist ein erstes Gewinde mit relativ weit beabstandeten Gewindegängen auf, während der zweite zylindrische Bereich ein zweites Gewinde mit relativ eng beabstandeten Gewindegängen aufweist. Zwischen dem balligen ersten Abschnitt und dem zylindrischen zweiten Abschnitt ist ferner noch ein balliger Übergangsbereich angeordnet.

Von Nachteil bei einer derartigen selbst-penetrierenden Schraube ist, dass sie nur für sehr dünne Bleche verwendbar ist, wie sie z. B. im Automobilbau verwendet werden. Zur Verschraubung eines Stapels von mehreren übereinander liegenden Blechen miteinander ist die Schraube nicht geeignet.

Aus der DE 196 37 969 C2 ist eine spanlos loch- und gewindeformende Schraube bekannt die einen Kopf mit Werkzeugeingriff und einen sich an diesen anschliessenden Gewindeschaft aufweist, der in einer konischen Verjüngung ausläuft. An den im Wesentlichen zylindrischen Gewindeschaft schliesst sich ein erster Bereich der konischen Verjüngung mit einer polygonalen Querschnittsform an, während der zweite Bereich der konischen Verjüngung als Spitzkegel geformt ist, wobei der Kegelwinkel des ersten und zweiten Bereichs etwas 60° beträgt.

Von Nachteil bei dieser Schraube ist ebenfalls, dass sie nur für sehr dünne Bleche von ca. 1,5 mm oder weniger verwendbar ist. Ferner erfordert das Setzen dieser Schraube hohe Anpresskräfte welche, z. B. im Automobilbau, durch Setzautomaten aufgebracht werden. Zur Verschraubung eines Stapels von mehreren übereinander liegenden Blechen miteinander ist diese Schraube ebenfalls nicht geeignet.

Aus der US 5 597 357 ist eine Selbstbohrschraube bekannt die an dem, dem Kopf abgewandten Ende des Schafts eine Bohrspitze aufweist. Mit dieser Selbstbohrschraube ist es möglich auch Metallbleche mit Dicken grösser 2 mm zu penetrieren.

Von Nachteil bei dieser Selbstbohrschraube ist jedoch, dass beim Setzvorgang Späne entstehen, die aus Korrosionsgründen aufwendig entfernt werden müssen. Ferner muss vom Anwender während des gesamten Bohrvorgangs eine hohe Anpresskraft aufgebracht werden. Durch die Zerspanung geht ausserdem material verloren, welches dann nicht an der Haltekraftaufnahme beteiligt sein kann.

Die Aufgabe der vorliegenden Erfindung liegt darin, die oben genannten Nachteile zu vermeiden und eine gewindeformende Schraube bereitzustellen, die spanlos auch Stapel von wenigstens zwei übereinander liegenden Metallblechen mit einer Gesamtdicke von wenigstens 2 mm durchdringen kann.

Dieses wird durch die in Patentanspruch 1 wiedergegebenen Massnahmen erreicht. Demnach weist die spanlos gewindeformende Schraube einen ersten balligen Abschnitt, der sich an den ersten spitzkonischen Abschnitt in Richtung des Kopfes anschliesst und dessen Mantelfläche in axialer Richtung einen ersten Krümmungsradius aufweist, und einen zweiten balligen Abschnitt auf, der zwischen dem ersten balligen Abschnitt und dem zylindrischen Abschnitt angeordnet ist und dessen Mantelfläche in axialer Richtung einen zweiten Krümmungsradius aufweist, wobei der erste Krümmungsradius ungleich dem zweiten Krümmungsradius ist.

Durch diese Massnahme wird erreicht, dass die erfindungsgemässe spanlos gewindeformende Schraube Metallbleche und Stapel von Metallblechen mit einer Gesamtdicke von 2 mm bis ca. 4 mm penetrieren und Gewinde formen kann. Es wird ferner sichergestellt, dass auch bei Schrauben mit einem maximalen Schaftdurchmesser von mehr als 4 mm die Belastbarkeit der Schraube nicht überschritten wird. Ferner wird die Schraube insgesamt nicht wesentlich länger.

Vorteilhaft ist zwischen dem ersten balligen Abschnitt und dem zweiten balligen Abschnitt ein konischer Übergangsabschnitt angeordnet, wodurch ein abrupter Lastanstieg zwischen den beiden Bereichen beim Eindrehen der Schraube vermieden werden kann.

Günstigerweise ist die Schraube so ausgelegt, dass der zweite Krümmungsradius kleiner ist als der erste Krümmungsradius, wodurch im Bereich des zweiten balligen Abschnitts eine grössere Steigung der Mantelfläche des Schafts erreicht wird als im Bereich des ersten balligen Abschnitts.

Von Vorteil ist es ferner, wenn ein Spitzenwinkel des spitzkonischen Abschnitts zwischen 10° und 20° beträgt, wodurch nur eine niedrige Anpresskraft für ein erstes Eindringen der Schraube in das zu verschraubende Material notwendig ist.

Vorteilhaft beträgt ein Konuswinkel des konischen Übergangsabschnitts zwischen 6° und 40° wodurch die Anpresskraft im Übergangsabschnitt niedrig gehalten werden kann.

In einer technisch optimierten Variante beträgt der erste Krümmungsradius zwischen 30 mm und 100 mm. Der zweite Krümmungsradius beträgt dabei z. B zwischen 15 und 30 mm.

Günstig ist es auch, wenn das Gewinde vom zylindrischen Abschnitt bis zum spitzkonischen Abschnitt verläuft, wobei die Gewindehöhe zum spitzkonischen Abschnitt hin abnimmt. Durch diese Massnahme wird zum einen erreicht, dass sich die Schraube durch die Schraubendrehung nach einem ersten Penetrieren selbsttätig in das Material bzw. den Untergrund hineinzieht, und zum anderen, dass die notwendige Anpresskraft für ein erstes Penetrieren niedrig gehalten werden kann.

Weitere Vorteile und Massnahmen der Erfindung ergeben sich aus den Unteransprüchen, der nachfolgenden Beschreibung und der Zeichnung. In der Zeichnung ist die Erfindung in einem Ausführungsbeispiel dargestellt.

Es zeigt:

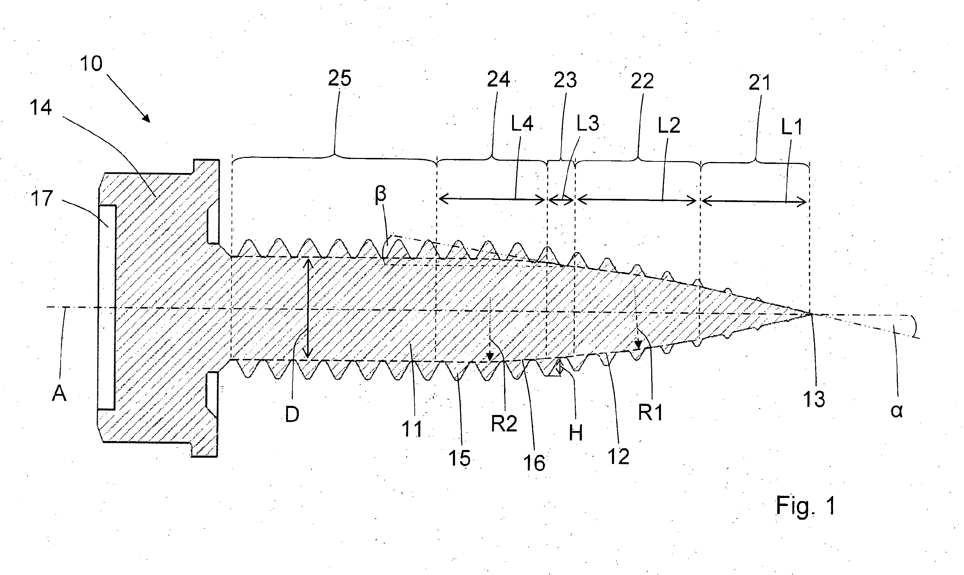

- Fig. 1: eine erfindungsgemässe gewindeformende Schraube im Längsschnitt.

Die in Figur 1 dargestellte spanlos loch- und gewindeformende Schraube 10 weist einen ein Gewinde 15 tragenden Schaft 11 auf, an dessen einem Ende eine Spitze 13 und an dessen gegenüberliegenden anderen Ende ein Kopf 14 angeordnet ist. Eine Schraubenachse A definiert dabei eine axiale Richtung der Schraube 10. Der Kopf 14 weist eine Werkzeugaufnahme 17 für ein Schraubwerkzeug wie ein Schrauberbit oder einen Schraubenzieher auf. Ein spitzkonischer Abschnitt 21 bzw. ein spitzkegeliger Abschnitt erstreckt sich von der Spitze 13 in Richtung des Kopfes 14. An diesen spitzkonischen Abschnitt 21 schliesst sich an seinem der Spitze 13 abgewandten Ende ein erster balliger Abschnitt 22 an. An diesen ersten balligen Abschnitt 22 schliesst sich in Richtung des Kopfes 14 ein konischer (bzw. kegeliger) Übergangsabschnitt 23 an. Dem konischen Übergangsabschnitt 23 folgt in Richtung des Kopfes 14 ein zweiter balliger Abschnitt 24, an den sich in Richtung des Kopfes 14 ein zylindrischer Abschnitt 25 anschliesst.

Eine Mantelfläche 12 des ersten balligen Abschnitts 22 weist in axialer Richtung einen Krümmungsradius R1 von 30 bis 100 mm auf. Eine Mantelfläche 16 des zweiten balligen Abschnitts 24 weist in axialer Richtung hingegen einen Krümmungsradius R2 von 15 bis 30 mm auf, wobei der Krümmungsradius R1 grösser ist als der Krümmungsradius R2. Die Mantelflächen der einzelnen Abschnitte 21, 22, 23, 24, 25 schliessen sich dabei ohne Stufen oder Sprünge an einander an.

Der spitzkonische Abschnitt 21 weist einen Spitzenwinkel α zwischen 10° und 20° auf, während ein Konuswinkel β des konischen Übergangsabschnitts zwischen 6° und 40° beträgt.

Das Gewinde 15 weist eine Gewindehöhe H auf, die vom zylindrischen Abschnitt 25 bis zum zweiten balligen Abschnitt 24 im Wesentlichen konstant ist. Vom konischen Übergangsabschnitt 23 bis zum spitzkonischen Abschnitt 21 nimmt die Gewindehöhe H jedoch in Richtung der Spitze 13 ab, wobei das Gewinde bis nahezu zur Spitze 13 verläuft.

Der Schaft 11 der Schraube 10 weist im Bereich des zylindrischen Abschnitts 25 einen Schaftdurchmesser D von z. B. 1,5 - 7 mm auf. Der konische Übergangsabschnitt 23 erstreckt sich in axialer Richtung über eine Länge L3 die kleiner ist als der Durchmesser D. Die axiale Länge L1 des spitzkonischen Abschnitts 21, die axiale Länge L2 des ersten balligen Abschnitts 22 und die axiale Länge L4 des zweiten balligen Abschnitts 22 sind in dem vorliegenden Beispiel jeweils grösser als der Durchmesser D.

## Patentansprüche

1. Spanlos gewindeformende Schraube (10) mit einem wenigstens bereichsweise ein Gewinde (15) tragenden Schaft (11) an dessen einem Ende eine Spitze (13) und an dessen gegenüberliegenden anderen Ende ein Kopf (14) angeordnet ist, und mit einem spitzkonischen Abschnitt (21) der sich von der Spitze (13) ausgehend in Richtung des Kopfes (14) erstreckt, und mit einem zylindrischen Abschnitt (25) der zwischen dem ersten spitzkonischen Abschnitt (21) und dem Kopf (14) angeordnet ist,
**gekennzeichnet durch**
einen ersten balligen Abschnitt (22), der sich an den ersten spitzkonischen Abschnitt (21) in Richtung des Kopfes (14) anschliesst und dessen Mantelfläche (12) in axialer Richtung einen ersten Krümmungsradius (R1) aufweist, und einen zweiten balligen Abschnitt (24), der zwischen dem ersten balligen Abschnitt (22) und dem zylindrischen Abschnitt (25) angeordnet ist und dessen Mantelfläche (16) in axialer Richtung einen zweiten Krümmungsradius (R2) aufweist, wobei der erste Krümmungsradius (R1) ungleich dem zweiten Krümmungsradius (R2) ist.

2. Schraube nach Anspruch 1, **dadurch gekennzeichnet, dass** zwischen dem ersten balligen Abschnitt (22) und dem zweiten balligen Abschnitt (24) ein konischer Übergangsabschnitt (23) angeordnet ist.

3. Schraube nach Anspruch 1, **dadurch gekennzeichnet, dass** der zweite Krümmungsradius (R2) kleiner ist als der erste Krümmungsradius (R1).

4. Schraube nach Anspruch 1, **dadurch gekennzeichnet, dass** ein Spitzenwinkel (α) des spitzkonischen Abschnitts zwischen 10° und 20° beträgt.

5. Schraube nach Anspruch 2, **dadurch gekennzeichnet, dass** ein Konuswinkel (β) des konischen Übergangsabschnitts zwischen 6° und 40° beträgt.

6. Schraube nach Anspruch 1 oder 3, **dadurch gekennzeichnet, dass** der erste Krümmungsradius (R1) zwischen 30 und 100 mm beträgt.

7. Schraube nach Anspruch 1 oder 3, **dadurch gekennzeichnet, dass** der zweite Krümmungsradius (R2) zwischen 15 und 30 mm beträgt.

8. Schraube nach Anspruch 1, **dadurch gekennzeichnet, dass** das Gewinde (15) vom zylindrischen Abschnitt (25) bis zum spitzkonischen Abschnitt (21) verläuft, wobei die Gewindehöhe (H) zum spitzkonischen Abschnitt (21) hin abnimmt.

## Claims

1. Swarf-free self-tapping screw (10) with a shank (11) at least a portion of which bears a screw thread (15) and which has a pointed tip (13) arranged at its one end and a head (14) arranged at its opposite other end, and with a conically tapering portion (21) extending from the tip (13) towards the head (14) and with a cylindrical portion (25) arranged between the first conically tapering portion (21) and the head (14),
**characterized by**
a first cambered portion (22) which adjoins the first conically tapering portion (21) in the direction towards the head (14) and whose circumferential surface (12) has a first radius of curvature (R1) in the axial direction, and a second cambered portion (24) which is arranged between the first cambered portion (22) and the cylindrical portion (25) and whose circumferential surface (16) has a second radius of curvature (R2) in the axial direction, the first radius of curvature (R1) being unequal to the second radius of curvature (R2).

2. Screw according to Claim 1, **characterized in that** a conical transition portion (23) is arranged between the first cambered portion (22) and the second cambered portion (24).

3. Screw according to Claim 1, **characterized in that** the second radius of curvature (R2) is smaller than the first radius of curvature (R1).

4. Screw according to Claim 1, **characterized in that** a point angle (*alpha*) of the conically tapering portion is between 10° and 20°.

5. Screw according to Claim 2, **characterized in that** a cone angle (*beta*) of the conical transition portion is between 6° and 40°.

6. Screw according to Claim 1 or Claim 3, **characterized in that** the first radius of curvature (R1) is between 30 and 100 mm.

7. Screw according to Claim 1 or Claim 3, **characterized in that** the second radius of curvature (R2) is between 15 and 30 mm.

8. Screw according to Claim 1, **characterized in that** the thread (15) runs from the cylindrical portion (25) to the conically tapering portion (21), with the thread's height (H) decreasing towards the conically tapering portion (21).

## Revendications

1. Vis autotaraudeuse sans enlèvement de copeaux (10) comportant au moins une tige (11) portant un filetage (15) au moins dans certaines zones, à une extrémité de laquelle est agencée une pointe (13) et à l'autre extrémité opposée de laquelle est agencée une tête (14), et comportant une partie conique pointue (21) qui s'étend en partant de la pointe (13) en direction de la tête (14), et une partie cylindrique (25) qui est agencée entre la première partie conique pointue (21) et la tête (14),
**caractérisée par**
une première partie bombée (22) qui est adjacente à la première partie conique pointue (21) en direction de la tête (14) et dont la surface d'enveloppe (12) a un premier rayon de courbure (R1) dans une direction axiale, et une seconde partie bombée (24) qui est agencée entre la première partie bombée (22) et la partie cylindrique (25) et dont la surface d'enveloppe (16) a un second rayon de courbure (R2) dans la direction axiale, le premier rayon de courbure (R1) n'étant pas égal au second rayon de courbure (R2).

2. Vis selon la revendication 1, **caractérisée en ce qu'**une partie de transition conique (23) est agencée entre la première partie bombée (22) et la seconde partie bombée (24).

3. Vis selon la revendication 1, **caractérisée en ce que** le second rayon de courbure (R2) est plus petit que le premier rayon de courbure (R1).

4. Vis selon la revendication 1, **caractérisée en ce qu'**un angle de pointe (α) de la partie conique pointue est compris entre 10° et 20°.

5. Vis selon la revendication 2, **caractérisée en ce qu'**un angle de cône (β) de la partie de transition conique est compris entre 6° et 40°.

6. Vis selon la revendication 1 ou 3, **caractérisée en ce que** le premier rayon de courbure (R1) est compris entre 30 et 100 mm.

7. Vis selon la revendication 1 ou 3, **caractérisée en ce que** le second rayon de courbure (R2) est compris entre 15 et 30 mm.

8. Vis selon la revendication 1, **caractérisée en ce que** le filetage (15) s'étend de la partie cylindrique (25) jusqu'à la partie conique pointue (21), la hauteur de filet (H) décroissant jusqu'à la partie conique pointue (21).
